# EUROPEAN PATENT APPLICATION

(11) **EP 2 083 510 A1**
(43) Date of publication of application: **29.07.2009**
(21) Application number: 08739391.4
(22) Date of filing: 25.03.2008
(51) Int. Cl.: H02M 3/155, B60L 7/12, B60L 15/20

(54) **ELECTRIC VEHICLE DRIVE DC-DC CONVERTER AND ELECTRIC VEHICLE**

(30) Priority: 29.03.2007 JP 2007088953
(71) Applicant: Mitsubishi Heavy Industries, Ltd., Tokyo 108-8215 (JP)
(72) Inventor: OKAZAKI, Yoshimi, Sagamihara-shi Kanagawa 229-1193 (JP); MORIMOTO, Masayuki, Tokyo 151-8677 (JP)
(74) Representative: Henkel, Feiler & Hänzel
(86) International application number: PCT/JP2008/056274
(87) International publication number: WO 2008/120773

(57) **Abstract**

An electric vehicle drive DC-DC converter and an electric vehicle are provided in which the electric vehicle drive DC-DC converter is constructed by connecting a plurality of DC-DC converter units in parallel, and in which a smoothing capacitor is allowed to be reduced in size thereof so that the DC-DC converter unit can be constructed in a small size, and electric power required by the electric vehicle can be coped with by only increasing the number of DC-DC converter units. Each of the DC-DC converter units includes: a coil having both ends thereof being connected to a DC power source and an electric vehicle drive source (motor); and a drive element which is connected in parallel to the electric vehicle drive source and driven in response to a signal supplied from a control circuit, the drive element having combined therewith a load current commutation diode. A single smoothing capacitor is connected in parallel to the electric vehicle drive source so that the respective drive elements of the plurality of DC-DC converter units are driven by the control circuit at different timings.

## Description

### Technical Field

The present invention relates to an electric vehicle drive DC-DC converter, and more particularly, to a DC-DC converter having DC input and DC output for an electric vehicle, which is mainly used for load handling, such as a battery forklift or a hybrid battery forklift truck.

### Background Art

In an electric vehicle which is mainly used for load handling, such as a battery forklift or a hybrid battery forklift, a DC-DC converter having DC input and DC output is used for motor driving.

In such an electric vehicle used for load handling, the electric vehicle has a relatively large weight of e.g., 1 or 2 tons even with its small size because it needs to have a weight thereof corresponding to the weight of a load that it lifts, and the electric vehicle requires a power corresponding to the weight of the electric vehicle per se.

For this reason, a DC-DC converter for driving a motor which is a drive source also requires a large output power. However, when electric power that can be handled is simply increased to comply with the required driving force, it is necessary to use large-capacity elements such as a step-up coil or a smoothing capacitor capable of handling a large current and thus, large-sized components are used. However, presently, large-sized components are less demanded and generally expensive, and it is necessary to prepare a large space for a power supply. Furthermore, when a large-capacity capacitor capable of handling a large current is included, the current rising or falling time will be increased.

For this reason, Patent Document 1(JP3324863B), for example, discloses a DC-DC converter in which a plurality of DC-DC converter units each comprising a step-up coil and a smoothing capacitor is connected in parallel, synchronized driving signals are applied from a PWM control portion to power transistors constituting the respective DC-DC converter units so that it is possible to obtain a large output power without increasing the size of the coil and the capacitor. Moreover, there is disclosed a DC-DC converter system in which in order to prevent the outputs of the respective DC-DC converter from fluctuating in response to variations in the electrical characteristics of used components, the output sides of the respective power transistors are connected via a capacitor so that the output voltages of the respective transistors are stabilized by the capacitor, and thus, variations are suppressed.

In the DC-DC converter disclosed in Patent Document 1, since the plurality of DC-DC converter units is connected in parallel, a smaller-sized coil or a smaller-capacity capacitor can be used as the coil or the capacitor of the individual DC-DC converter units compared with the case where a single DC-DC converter has a large capacity. However, since the synchronized driving signals are supplied from the PWM controller to the power transistors constituting the respective DC-DC converter units for simultaneous turning ON/OFF of the transistors, as described in paragraph [0058] of Patent Document 1, it is necessary to increase the capacitance of the capacitor C01 as the difference in the current flowing in the respective units resulting from variations in the components increases. Therefore, the capacitors of the respective DC-DC converter units need to have a corresponding capacitance margin.

### Disclosure of the Invention

Therefore, an object of the present invention is to provide an electric vehicle drive DC-DC converter and an electric vehicle, in which the electric vehicle drive DC-DC converter is constructed by connecting a plurality of DC-DC converter units in parallel, and in which a smoothing capacitor, a choke coil, and a power transistor are allowed to be reduced in size thereof so that the DC-DC converter unit can be constructed in a small size, and electric power required by the electric vehicle can be coped with by only increasing the number of DC-DC converter units.

To solve the above-described problems, a DC-DC converter according to the present invention is an electric vehicle drive DC-DC converter constructed by connecting a plurality of DC-DC converter units in parallel to an electric vehicle drive source, **characterized in that:** each of the plurality of DC-DC converter units comprises: a coil having both ends thereof being connected to a DC power source and the electric vehicle drive source, respectively; and a drive element which is connected in parallel to the electric vehicle drive source and is driven in response to a signal supplied from a control circuit; and in that a single smoothing capacitor is connected in parallel to the electric vehicle drive source so that respective drive elements in the plurality of DC-DC converter units are driven by the control circuit at different timings.

Moreover, an electric vehicle using the electric vehicle drive DC-DC converter is **characterized in that** the electric vehicle comprises: a DC-DC converter system, which comprises: a plurality of DC-DC converter units, each comprising: a DC power source; an electric vehicle drive source; a coil having both ends thereof being connected to the DC power source and the electric vehicle drive source, respectively; and a drive element which is connected in parallel to the electric vehicle drive source; and a single smoothing capacitor which is connected in parallel to the electric vehicle drive source, the DC-DC converter system stepping up and supplying a voltage of the DC power source to the electric vehicle drive source; and a control circuit which supplies driving signals to the drive elements included in the respective ones of the plurality of DC-DC converter units of the DC-DC converter system at different timings; and in that the drive elements are driven at different timings, whereby stepped-up voltages are supplied to the smoothing capacitor at different timings to thereby drive the electric vehicle drive source.

In this manner, by providing a single smoothing capacitor to a plurality of DC-DC converter units connected in parallel and driving the drive elements constituting the respective DC-DC converter units at different timings, the current from the respective DC-DC converter units driven by the drive elements flows into the smoothing capacitor at different timings. Therefore, even when a large output power is required, it is possible to cope with the output requirement using a small-sized smoothing capacitor with respect to the whole electric vehicle drive DC-DC converter, and thus, it becomes advantageous in terms of cost. Moreover, since it is possible to achieve a small size of the smoothing capacitor, the size of the power source can be decreased by that much, and thus, it becomes advantageous in terms of space. Moreover, since it is possible to achieve a small capacity of the smoothing capacitor, the rising and falling time during turning ON/OFF of the drive elements can be shortened by that much. Furthermore, since the plurality of DC-DC converter units are connected in parallel, it is possible to decrease not only the size of the smoothing capacitor but also the size of the choke coils or the power transistors as the drive sources, whereby the electric vehicle drive DC-DC converter and the electric vehicle become more cost effective.

Moreover, in order to solve the problems, a DC-DC converter according to the present invention is an electric vehicle drive DC-DC converter constructed by connecting a plurality of DC-DC converter units in parallel to an electric vehicle drive source, **characterized in that:** each of the plurality of DC-DC converter units comprises: a coil having both ends thereof being connected to a DC power source and the electric vehicle drive source, respectively; a smoothing capacitor which is connected in parallel to the electric vehicle drive source; and a drive element which is connected in parallel to the electric vehicle drive source and is driven in response to a signal supplied from a control circuit; and in that respective drive elements in the plurality of DC-DC converter units are driven by the control circuit at different timings.

Moreover, an electric vehicle using the electric vehicle drive DC-DC converter is **characterized in that** the electric vehicle comprises: a DC-DC converter system, which comprises: a plurality of DC-DC converter units, each comprising: a DC power source; an electric vehicle drive source; a coil having both ends thereof being connected to the DC power source and the electric vehicle drive source, respectively; and a smoothing capacitor and a drive element which are, respectively, connected in parallel to the electric vehicle drive source, the DC-DC converter units being connected in parallel to the electric vehicle drive source, and the DC-DC converter system stepping up and supplying a voltage of the DC power source to the electric vehicle drive source; and a control circuit which supplies driving signals to the drive elements of the respective ones of the plurality of DC-DC converter units constituting the DC-DC converter system at different timings; and in that the drive elements are driven at different timings, whereby the smoothing capacitors constituting the plurality of DC-DC converter units are charged at different timings to thereby drive the electric vehicle drive source.

In this manner, by driving the drive elements constituting the respective DC-DC converter units at different timings even when the smoothing capacitors are provided to the respective ones of the plurality of DC-DC converter units, the currents from the respective DC-DC converter units generated by the drive elements are equally divided to flow into the smoothing capacitors. Moreover, it is possible to decrease the amplitude of a ripple current produced in the smoothing capacitors by increasing the frequency of the ripple current. Therefore, since it is possible to decrease the capacity of the individual smoothing capacitors and the total capacity thereof, compared with the case of the DC-DC converter of Patent Document 1, and thus, it becomes advantageous in terms of cost. Since it is possible to achieve a small capacity of the smoothing capacitors, the rising and falling time during turning ON/OFF the current of the drive elements can be shortened by that much. Furthermore, similar to the above, since the plurality of DC-DC converter units are connected in parallel, it is possible to decrease not only the size of the smoothing capacitor but also the size of the choke coils or the power transistors as the drive sources, whereby the electric vehicle drive DC-DC converter and the electric vehicle become more cost effective.

Moreover, as described above, in an electric vehicle used for load handling, since the electric vehicle has a relatively large weight of e.g., 1 or 2 tons even with its small size because it needs to have a weight thereof corresponding to the weight of a load that it lifts, the DC-DC converter for driving a motor which is a drive source also requires a large output power. However, since the DC-DC converter has the above-described construction, the smoothing capacitor, the choke coil, the power transistor, and the like are allowed to be reduced in size thereof, and thus, low-cost and small-sized components can be used. Moreover, it is not necessary to prepare a large space for a power source. Furthermore, since a small-capacity capacitor is used, the current rising or falling time is shortened, and thus, the response characteristics of the electric vehicle can be improved.

Furthermore, when the drive element of each DC-DC converter unit is constructed by a plurality of drive elements connected in parallel, it is possible to use the respective drive elements having a rating thereof decreased by that much, and thus, it is possible to obtain a small-sized electric vehicle drive DC-DC converter that is more advantageous in terms of cost.

Furthermore, the electric vehicle drive source is constructed to generate regenerative electric power during deceleration of an electric vehicle; and a drive element for regenerative voltage step-down having combined therewith a load current commutation diode is disposed between the coil and the electric vehicle drive source, whereby it is possible to return the regenerative electric power to a DC power source such as a battery and to obtain an efficient power source for driving the electric vehicle.

Furthermore, in accordance with a preferred embodiment of the present invention, the drive element is an element formed by combining an use load current commutation diode with an IGBT (Insulated Gate Bipolar Transistor) having attached thereto a FWD (Free Wheeling Diode) or with a power MOSFET (Complementary Metal Oxide Semiconductor Field Effect Transistor).

As described above, in accordance with the present invention, by driving the drive elements constituting the respective DC-DC converter units at different timings, it is possible to achieve a small capacity of the smoothing capacitor, the choke coil, the power transistor, and the like, and thus, it becomes advantageous in terms of cost by that much. Moreover, it is possible to construct the electric vehicle drive DC-DC converter in a small size. Since it is possible to achieve a small capacity of the smoothing capacitor, the rising or falling time during turning ON/OFF of the current of the drive elements can be shortened by that much. Moreover, since the DC-DC converter is constructed in the form of a unit, by adding the unit to comply with the weight of the electric vehicle, for example, it is possible to easily obtain a DC-DC converter having corresponding output power. Therefore, it is possible to provide a DC-DC converter suitable for driving an electric vehicle.

### Brief Description of the Drawings

Fig. 1 is a circuit diagram of an electric vehicle drive DC-DC converter according to a first embodiment of the present invention.
Fig. 2 is a circuit diagram of an electric vehicle drive DC-DC converter according to a second embodiment of the present invention.
Fig. 3 is a circuit diagram of an electric vehicle drive DC-DC converter according to a third embodiment of the present invention.
Fig. 4 is a timing chart illustrating timings for driving drive elements included in each of a plurality of DC-DC converters constituting the electric vehicle drive DC-DC converter according to the present invention.
Fig. 5 is a block diagram of an overall circuit including the electric vehicle drive DC-DC converter according to the present invention, a controller thereof, a power source and a load.
Fig. 6 is a side view of a forklift truck as an electric vehicle using the electric vehicle drive DC-DC converter according to the present invention.

### Best Mode for Carrying out the Invention

Preferred embodiments of the present invention will now be detailed with reference to the accompanying drawings. It is intended, however, that unless particularly specified, dimensions, materials, shape, relative positions and so forth of the constituent parts in the embodiments shall be interpreted as illustrative example only not as limitative of the scope of the present invention.

### First Embodiment

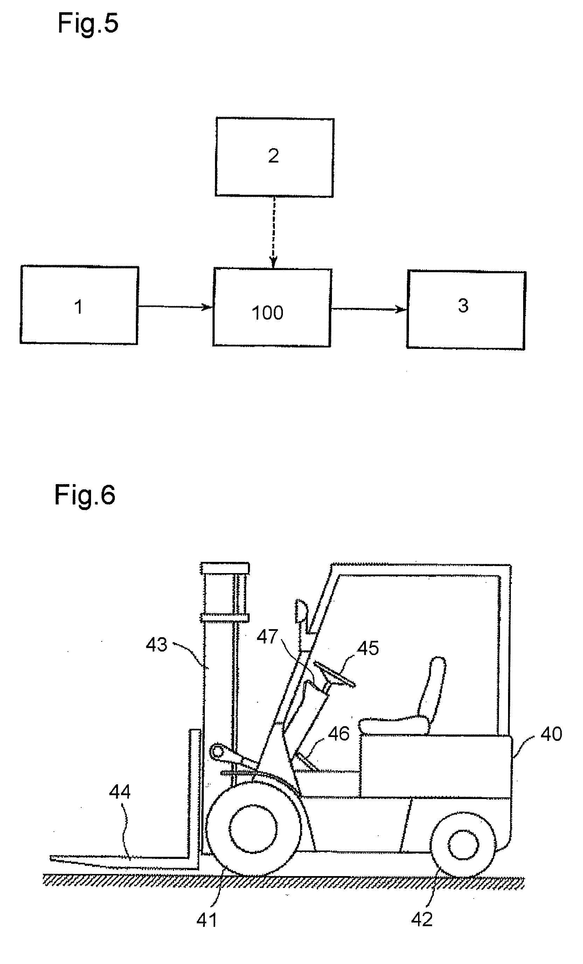

First, an overview of an electric vehicle according to the present invention will be briefly described with reference to Fig. 6, which is a side view of a forklift truck as the electric vehicle using the electric vehicle drive DC-DC converter according to the present invention.

The forklift truck illustrated in Fig. 6 includes a pair of front wheels 41 and a pair of rear wheels 42 which are provided on the left and right sides in the lower part of a vehicle body 40, a mast 43 which is provided at the front part of the vehicle body 40, and a fork 44 which is frontwardly protruded from the mast 43. The front wheels 41 are driving wheels to which positive/negative rotational drive force is individually applied by independent drive motors (not illustrated) in response to a driver's manipulations on a steering wheel 45, a brake/accelerator pedal 46, and a forward/backward switching lever. The driving of the respective drive motors is controlled by a controller which is connected to the steering wheel 45, the brake/accelerator pedal 46, and the forward/backward switching lever.

The rear wheels 42 are casters, which are individually rotatably supported on a pair of left and right spindles. Specifically, each of the rear wheels has a caster part having a wheel shaft that is eccentric to a spindle fixed to the vehicle body 40 and a ball bearing part supporting the caster part to be rotatable about the spindle. The mast 43 has a lower end portion thereof being axially supported on the vehicle body 40 and is slightly tilted back and forth by the driver's manipulation. The fork 44 is a portion on which an object to be loaded, unloaded or transferred is placed, and which is lifted along the mast 43 by the driver's manipulation.

In a display 47 which is installed in the steering wheel 45 to be seen by an operator, a fuel gauge, a vehicle direction indicator, a coolant temperature gauge, an hour meter, a speed meter, and the like are displayed by means of liquid crystals so that the operator can be informed of the state of the forklift truck.

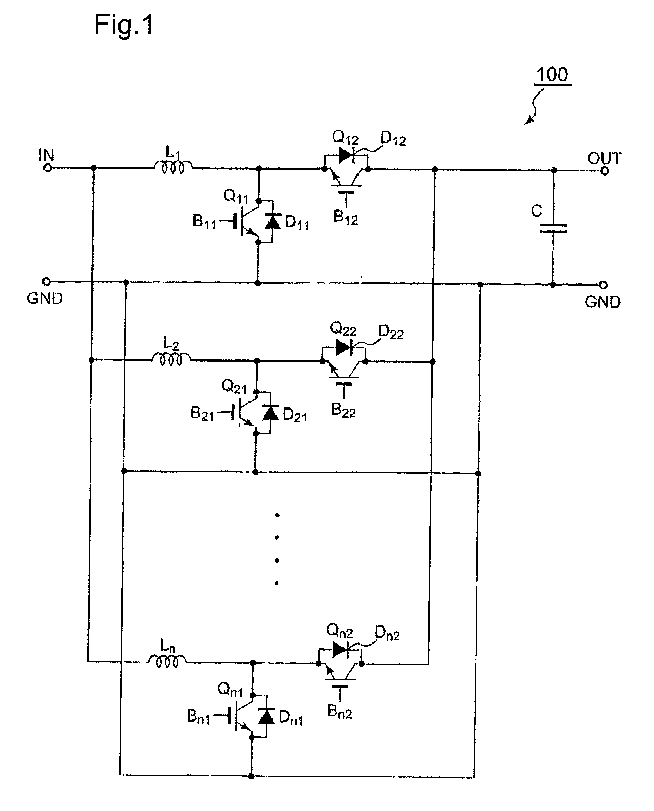

Fig. 1 is a circuit diagram of an electric vehicle drive DC-DC converter 100 according to a first embodiment of the present invention. In the figure, IN is a DC input terminal, GND is a ground terminal, L₁, L₂, ..., and Lₙ are choke coils, and Q₁₁, Q₂₁, ..., and Qₙ₁ are drive elements for voltage step-up, obtained by combining an use load current commutation diode with an IGBT (Insulated Gate Bipolar Transistor) having attached thereto FWD (Free Wheeling Diode) D₁₁, D₂₁, ..., and Dₙ₁ or with a power MOSFET (Complementary Metal Oxide Semiconductor Field Effect Transistor), for example.

Q₁₂, Q_{22,} ..., and Qₙ₂ are drive elements for voltage step-down, obtained by combining an use load current commutation diode with an IGBT (Insulated Gate Bipolar Transistor) having attached thereto FWD (Free Wheeling Diode) D₁₂, D₂₂, ..., and Dₙ₂ or with a power MOSFET (Complementary Metal Oxide Semiconductor Field Effect Transistor), C is a smoothing capacitor, and OUT and GND are connection terminals to an electric vehicle drive source (motor) as a load. Moreover, when the electric vehicle drive source (motor) as a load is constructed to generate regenerative electric power during deceleration of the electric vehicle, the drive elements for voltage step-down Q₁₂, Q₂₂, ..., and Qₙ₂ return the regenerative electric power to a DC power source such as a battery.

In the electric vehicle drive DC-DC converter 100 according to the first embodiment, one DC-DC converter unit is constructed by a choke coil L₁, a step-up drive element Q₁₁ having the FWD D₁₁, and a step-down drive element Q₁₂ having the FWD D₁₂, and a plurality of similarly constructed DC-DC converter units is connected to the DC power source and the electric vehicle drive source (motor) as the load. Moreover, a single smoothing capacitor C is connected in parallel to the electric vehicle drive source (motor) as the load.

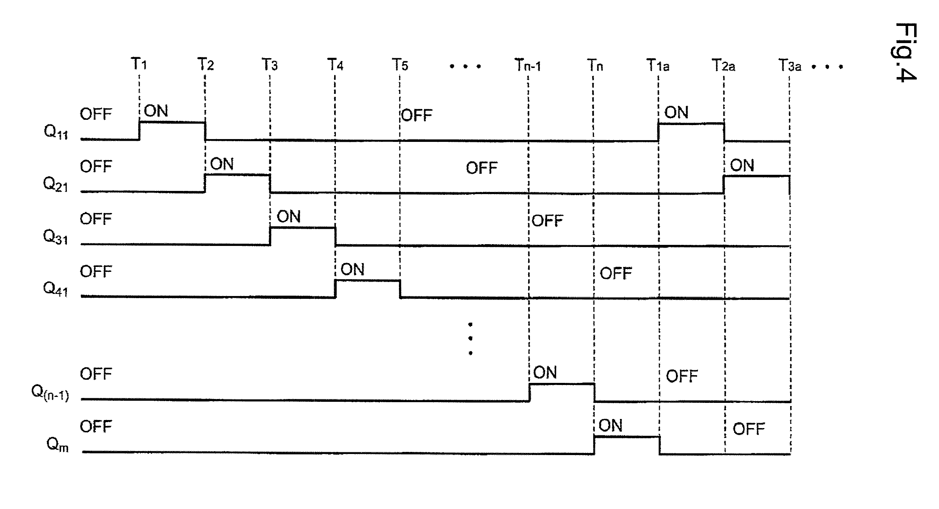

Fig. 5 is a block diagram of an overall circuit including the electric vehicle drive DC-DC converter 100 according to the present invention, a controller thereof (control circuit) 2, a DC power source 1, and a load 3 constructed by the electric vehicle drive source (motor). Among them, the DC power source 1 is connected to the IN terminal and the GND terminal in Fig. 1, and the load 3 as the electric vehicle drive source (motor) is connected to a load-side connection terminal OUT and a load-side ground terminal GND. The controller 2 is constructed by a CPU or the like so as to supply driving signals having different timings to, for example, bases B₁₁, B₂₁, ..., and Bₙ₁ of the step-up drive elements Q₁₁, Q₂₁, ..., and Qₙ₁ of the respective DC-DC converter units as illustrated in Fig. 4.

In the thus-constructed electric vehicle drive DC-DC converter 100 according to the present invention, the controller 2 supplies a signal capable of turning on the drive element Q₁₁ to the base B₁₁ of the drive element Q₁₁ at time T₁ in Fig. 4. When the signal is turned off at time T₂, energy stored in the choke coil L₁ flows through the FWD (use load current commutation diode) D₁₁ and FWD D₁₂, whereby a voltage is stepped up, and the electric vehicle drive source (motor) 3 as the load connected to the OUT terminal and the GND terminal is driven with the stepped-up voltage via the smoothing capacitor C.

Moreover, the signal applied to the base B₁₁ of the drive element Q₁₁ is turned off at time T₂, and at the same time, the controller 2 supplies a signal capable of turning on the drive element Q₂₁ to the base B₂₁ of the drive element Q₂₁ as illustrated at time T₂ of Fig. 4. When the signal is turned off as illustrated at time T₃ of Fig. 4, energy stored in the choke coil L₂ flows through the FWD D₂₁ and FWD D₂₂, whereby a voltage is stepped up, and the electric vehicle drive source (motor) 3 as the load connected to the OUT terminal and the GND terminal is driven with the stepped-up voltage via the smoothing capacitor C.

Therefore, by repeating the above operations on the step-up drive elements Q₃₁, Q₄₁, ..., and Qₙ₁, when signals corresponding to the periods from time T₃ to Tₙ₋₁ in Fig. 4, which are applied from the controller 2 to the bases B₃₁, B₄₁, ..., and Bₙ₁ of the respective drive elements Q₃₁, Q₄₁, ..., and Qₙ₁, are turned off, the electric vehicle drive source (motor) 3 as the load connected to the OUT terminal and the GND terminal is driven via the smoothing capacitor C with the stepped-up voltages flowing through FWD D₃₁, FWD D₃₂, ..., FWD Dₙ₁, and FWD Dₙ₂, respectively.

Therefore, the voltages flowing into the smoothing capacitor C are voltages generated when the respective drive elements Q₃₁, Q₄₁, ..., and Qₙ₁ are turned off. Therefore, for example, even when the electric vehicle drive DC-DC converter requires a large output power, it is possible to cope with the output requirement with the smoothing capacitor C, the choke coil L, and the power transistor Q as the driving element, which have a small rating. Moreover, it is possible to decrease the amplitude of a ripple current produced in the smoothing capacitor by increasing the frequency of the ripple current. As a result, it become advantageous in terms of cost, and it is possible to achieve a small size of the smoothing capacitor, whereby the size of the power source can be decreased by that much and the rising and falling time during turning ON/OFF of the drive elements can be shortened by that much. Furthermore, since the plurality of DC-DC converter units are connected in parallel, it is possible to decrease not only the size of the smoothing capacitor but also the size of the choke coils or the power transistors as the drive sources, whereby the electric vehicle drive DC-DC converter and the electric vehicle become more cost effective.

### Second Embodiment

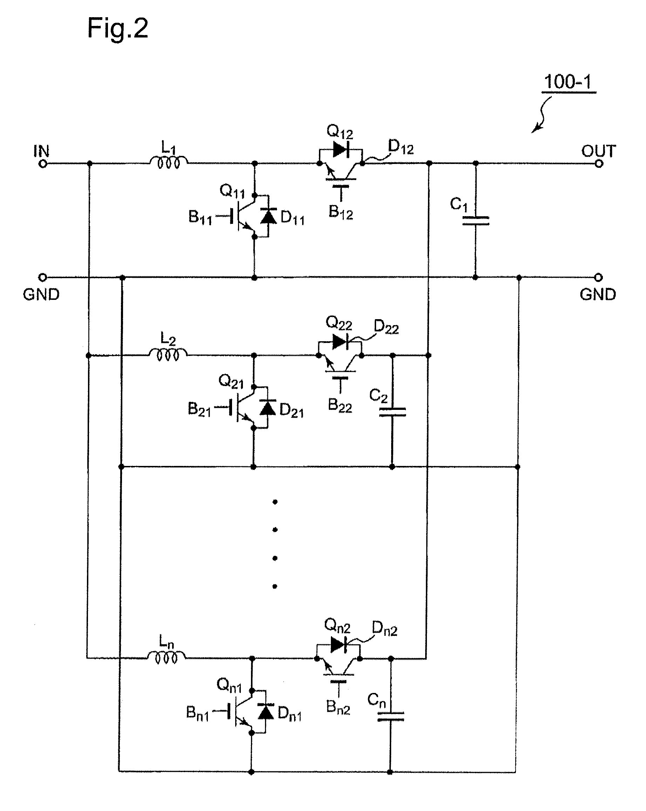

Next, a description of an electric vehicle drive DC-DC converter 100-1 according to a second embodiment of the present invention illustrated in Fig. 2 will be provided. In the above-described first embodiment of Fig. 1, one DC-DC converter unit is constructed by the choke coil L₁, the step-up drive element Q₁₁ having the FWD D₁₁, and the step-down drive element Q₁₂ having the FWD D₁₂, and a plurality of similarly constructed DC-DC converter units is connected to the DC power source and the electric vehicle drive source (motor) as the load. Moreover, a single smoothing capacitor C is connected in parallel to the electric vehicle drive source (motor) as the load.

To the contrary, although the electric vehicle drive DC-DC converter 100-1 according to the second embodiment illustrated in Fig. 2 is similar to the first embodiment in that one DC-DC converter unit includes the coke coil L₁, the step-up drive element Q₁₁ having the FWD D₁₁, and the step-down drive element Q₁₂ having the FWD D₁₂, the first embodiment has such a construction that a single smoothing capacitor C is provided to each of the DC-DC converter unit as smoothing capacitors C₁, C₂, ..., Cₙ, and a plurality of DC-DC converter units is connected the DC power source and the electric vehicle drive source (motor) as the load.

The overall circuit including the DC power source 1, the controller 2, and the load 3 constructed by the electric vehicle drive source (motor) is exactly the same as that of Fig. 5. Moreover, the construction that the controller 2 supplies driving signals having different timings to, for example, bases B₁₁, B₂₁, ..., and Bₙ₁ of the step-up drive elements Q₁₁, Q₂₁, ..., and Qₙ₁ of the respective DC-DC converter units as illustrated in Fig. 4 is the same as that of the first embodiment described with respect to Fig. 1.

Therefore, the operation thereof is similar to that of the first embodiment illustrated in Fig. 1. Specifically, the controller 2 supplies a signal capable of turning on the drive element Q₁₁ to the base B₁₁ of the drive element Q₁₁ at time T₁ in Fig. 4. When the signal is turned off at time T₂, energy stored in the choke coil L₁ flows through the FWD (use load current commutation diode) D₁₁ and FWD D₁₂, whereby a voltage is stepped up, and the electric vehicle drive source (motor) 3 as the load connected to the OUT terminal and the GND terminal is driven with the stepped-up voltage via the smoothing capacitors C₁, C₂, ..., and Cₙ.

That is, unlike the first embodiment, the stepped-up voltage flows into all of the smoothing capacitors C₁, C₂, ..., and Cₙ constituting the respective DC-DC converter units. Therefore, the total capacity of these smoothing capacitors C₁, C₂, ..., and Cₙ is set to be identical with the capacity of the smoothing capacitor C of Fig. 1, and thus, it is possible to use a capacitor having a size being decreased by that much.

Moreover, the signal applied to the base B₁₁ of the drive element Q₁₁ is turned off at time T₂ of Fig. 4, and at the same time, the controller 2 supplies a signal capable of turning on the drive element Q₂₁ to the base B₂₁ of the drive element Q₂₁ as illustrated at time T₂. When the signal is turned off as illustrated at time T₃ of Fig. 4, energy stored in the choke coil L₂ flows through the FWD D₂₁ and FWD D₂₂, whereby a voltage is stepped up, and the electric vehicle drive source (motor) 3 as the load connected to the OUT terminal and the GND terminal is driven with the stepped-up voltage via the smoothing capacitors C₁, C₂, ..., and Cₙ.

The subsequent operations are exactly the same as those of the above. Specifically, when signals corresponding to the periods from time T₃ to Tₙ₋₁ in Fig. 4, which are applied from the controller 2 to the bases B₃₁, B₄₁, ..., and Bₙ₁ of the step-up drive elements Q₃₁, Q₄₁, ..., and Qₙ₁, are turned off, the electric vehicle drive source (motor) 3 as the load connected to the OUT terminal and the GND terminal is driven via the smoothing capacitors C₁, C₂, ..., and Cₙ with the stepped-up voltages flowing through FWD D₃₁, FWD D₃₂, ..., FWD Dₙ₁, and FWD Dₙ₂, respectively.

Therefore, the voltages flowing into the smoothing capacitors C₁, C₂, ..., and Cₙ are voltages generated when the respective drive elements Q₃₁, Q₄₁, ..., and Qₙ₁ are turned off. Therefore, for example, even when the electric vehicle drive DC-DC converter requires a large output power, it is possible to cope with the output requirement with the smoothing capacitors C₁, C₂, ..., and Cₙ, which have a small capacity. As a result, it become advantageous in terms of cost, and it is possible to achieve a small size of the smoothing capacitors, whereby the size of the power source can be decreased by that much and the rising and falling time during turning ON/OFF of the drive elements can be shortened by that much. Furthermore, since the plurality of DC-DC converter units are connected in parallel, it is possible to decrease not only the size of the smoothing capacitor but also the size of the choke coils or the power transistors as the drive sources, whereby the electric vehicle drive DC-DC converter and the electric vehicle become more cost effective.

### Third Embodiment

Although in the first and second embodiments described above, the step-up drive elements Q₁₁, Q₂₁, ..., and Qₙ₁ are provided to correspond to the respective DC-DC converter units, by providing a plurality of groups of the step-up drive elements Q₁₁, Q₂₁, ..., and Qₙ₁ so as to correspond to the respective DC-DC converter units, it is possible to use the step-up drive elements Q₁₁, Q₂₁, ..., and Qₙ₁ which have a smaller rating such as withstand voltage or current capacity at this time.

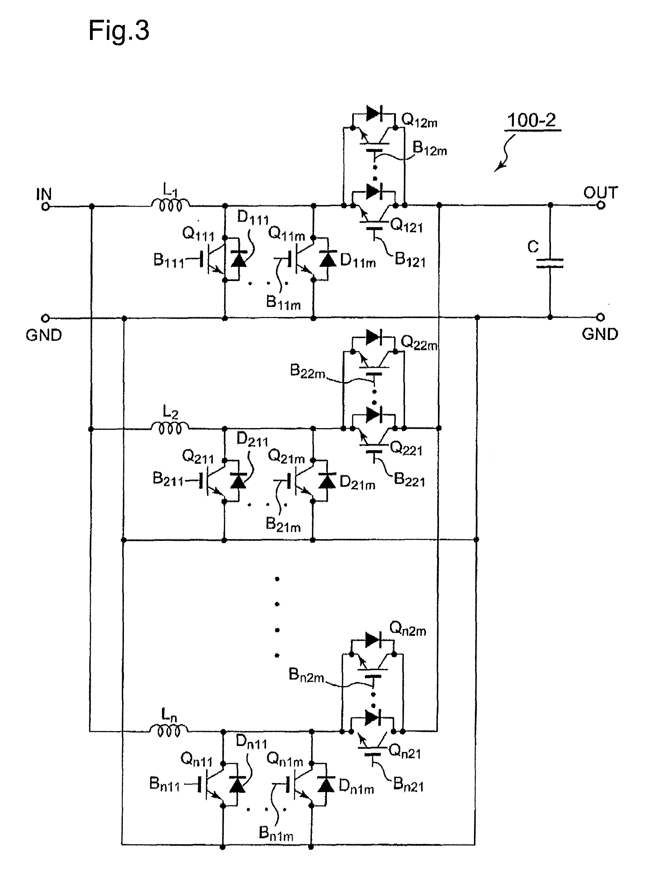

Such a case is an electric vehicle drive DC-DC converter 100-2 according to a third embodiment of the present invention illustrated in Fig. 3. In the electric vehicle drive DC-DC converter 100-2 according to the third embodiment, a plurality of groups of step-up drive elements Q₁₁, Q₂₁, ..., and Qₙ₁, each group of which was provided so as to correspond to the respective DC-DC converter units in the first and second embodiment, is provided so as to correspond to the respective DC-DC converter units in a manner that the drive element Q₁₁ includes a group of drive elements consisting of Q₁₁₁, Q₁₁₂, ..., and Q₁₁ₙ, and similarly, Q₂₁ includes a group of drive elements consisting of Q₂₁₁, Q₂₁₂, ..., and Q₂₁ₙ. Similarly, a plurality of groups of step-down drive elements Q₁₂, Q₂₂, ..., and Qₙ₂ is provided so as to correspond to the respective DC-DC converter units in a manner that the step-down drive element Q₁₂ includes a group of drive elements consisting of Q₁₂₁, Q₁₂₂, ...., and Q₁₂ₙ, and similarly, Q₂₂ includes a group of drive elements consisting of Q₂₂₁, Q₂₂₂, ..., and Q₂₂ₙ.

In this manner, by applying driving signals from the controller 2 at different timings as illustrated in Fig. 4 to the plurality of groups of step-up drive elements Q₁₁₁, Q₁₁₂, ..., Q₁₁ₙ, Q₁₂₁, Q₁₂₂, ..., and Q₁₂ₙ, ..., and so forth of the respective DC-DC converter units in a manner similar to the first and second embodiments illustrated in Figs. 1 and 2, it is possible to construct the electric vehicle drive DC-DC converter operating in the same manner as the above-described first and second embodiments by using the step-up and step-down drive elements having a smaller rating. Therefore, it is possible to suppress the cost increase of the electric vehicle drive DC-DC converter by that much. Although Fig. 3 illustrates, by way of example, the case of the construction according to the first embodiment illustrated in Fig. 1, it is obvious that the same construction can be applied to the construction according to the second embodiment illustrated in Fig. 2 in the exactly same manner.

In the descriptions above, although the operations using the step-down drive elements Q₁₂, Q₂₂, ..., and Qₙ₂ are not described, when the electric vehicle drive source (motor) is constructed to generate regenerative electric power during deceleration of the electric vehicle, the driving signals as illustrated in Fig. 4 are supplied to the step-down drive elements Q₁₂, Q₂₂, ..., and Qₙ₂ while the signals are not supplied to the step-up drive elements Q₁₁, Q₂₁, ..., and Qₙ₁ illustrated in Fig. 1, whereby it is possible to return a current having stepped-down regenerative electric power to the DC power source 1. Therefore, it is possible to obtain an efficient electric vehicle.

As variously described above, according to the first embodiment of the present invention, a single smoothing capacitor C is provided to a plurality of DC-DC converter units connected in parallel, and the drive elements Q₁₁, Q₂₁, ..., and Qₙ₁ constituting the respective DC-DC converter units are driven at different timings, whereby the current from the respective DC-DC converter units driven by the respective drive elements Q₁₁, Q₂₁, ..., and Qₙ₁ flows into the smoothing capacitor C at different timings. Therefore, even when a large output power is required, it is possible to cope with the output requirement using the small-sized smoothing capacitor C with respect to the whole electric vehicle drive DC-DC converter, and thus, it becomes advantageous in terms of cost. Moreover, since it is possible to achieve a small size of the smoothing capacitor C, the size of the power source can be decreased by that much. Moreover, since it is possible to achieve a small capacity of the smoothing capacitor C, the rising and falling time during turning ON/OFF of the drive elements can be shortened by that much. Furthermore, since the plurality of DC-DC converter units are connected in parallel, it is possible to decrease not only the size of the smoothing capacitor but also the size of the choke coils or the power transistors as the drive sources, whereby the electric vehicle drive DC-DC converter and the electric vehicle become more cost effective.

Moreover, according to the second embodiment of the present invention, even when the smoothing capacitors C₁, C₂, ..., and Cₙ are provided to correspond to the respective ones of the plurality of DC-DC converter units, by driving the drive elements Q₁₁, Q₂₁, ..., and Qₙ₁ constituting the respective DC-DC converter units at different timings, the current from the respective DC-DC converter units produced by the respective drive elements Q₁₁. Q₂₁, ..., and Qₙ₁ is equally divided to flow into the smoothing capacitors C₁, C₂, ..., and Cₙ. Therefore, it is possible to decrease the capacity of the individual smoothing capacitors C₁, C₂, ..., and Cₙ compared with the case of the DC-DC converter of Patent Document 1, and thus, it becomes advantageous in terms of cost. Since it is possible to achieve a small capacity of the smoothing capacitors C_{1,} C₂, ..., and Cₙ, the rising and falling time during turning ON/OFF of the current of the drive elements Q₁₁, Q₂₁, ..., and Qₙ₁ can be shortened by that much. Furthermore, similar to the above, since the plurality of DC-DC converter units are connected in parallel, it is possible to decrease not only the size of the smoothing capacitor but also the size of the choke coils or the power transistors as the drive sources, whereby the electric vehicle drive DC-DC converter and the electric vehicle become more cost effective.

Furthermore, by forming modules having therein a set of elements consisting of the power transistor as the drive element and the choke coil or modules having therein a set of elements consisting of the power transistor as the drive element, the choke coil, and the capacitor and increasing the number of modules arranged in line, it is possible to obtain the electric vehicle drive DC-DC converter and the electric vehicle, which can be easily adapted to an application such as a forklift truck where an output power thereof changes greatly with weight thereof.

### Industrial Applicability

In accordance with the present invention, it is possible to provide an electric vehicle drive DC-DC converter and an electric vehicle, in which the electric vehicle drive DC-DC converter is constructed by connecting a plurality of DC-DC converter units in parallel, and in which a smoothing capacitor is allowed to be reduced in size thereof so that the DC-DC converter unit can be constructed in a small size, and electric power required by the electric vehicle can be coped with by only increasing the number of DC-DC converter units.

## Claims

1. An electric vehicle drive DC-DC converter constructed by connecting a plurality of DC-DC converter units in parallel to an electric vehicle drive source,
**characterized in that:**
each of the plurality of DC-DC converter units comprises:
a coil having both ends thereof being connected to a DC power source and the electric vehicle drive source, respectively; and
a drive element which is connected in parallel to the electric vehicle drive source and is driven in response to a signal supplied from a control circuit; and
**in that** a single smoothing capacitor is connected in parallel to the electric vehicle drive source so that respective drive elements in the plurality of DC-DC converter units are driven by the control circuit at different timings.

2. An electric vehicle drive DC-DC converter constructed by connecting a plurality of DC-DC converter units in parallel to an electric vehicle drive source,
**characterized in that:**
each of the plurality of DC-DC converter units comprises:
a coil having both ends thereof being connected to a DC power source and the electric vehicle drive source, respectively;
a smoothing capacitor which is connected in parallel to the electric vehicle drive source; and
a drive element which is connected in parallel to the electric vehicle drive source and is driven in response to a signal supplied from a control circuit; and
**in that** respective drive elements in the plurality of DC-DC converter units are driven by the control circuit at different timings.

3. The electric vehicle drive DC-DC converter according to claim 1 or 2, **characterized in that** the drive element of each DC-DC converter unit is constructed by a plurality of drive elements connected in parallel.

4. The electric vehicle drive DC-DC converter according to any one of claims 1 to 3, **characterized in that:**
the electric vehicle drive source is constructed to generate regenerative electric power during deceleration of an electric vehicle; and
a drive element for regenerative voltage step-down having combined therewith an use load current commutation diode is disposed between the coil and the electric vehicle drive source.

5. The electric vehicle drive DC-DC converter according to any one of claims 1 to 4, **characterized in that** the drive element is an element formed by combining an use load current commutation diode with an IGBT (Insulated Gate Bipolar Transistor) having attached thereto a FWD (Free Wheeling Diode) or with a power MOSFET (Complementary Metal Oxide Semiconductor Field Effect Transistor).

6. An electric vehicle, **characterized in that** the electric vehicle comprises:
a DC-DC converter system, which comprises:
a plurality of DC-DC converter units, each comprising:
a DC power source;
an electric vehicle drive source;
a coil having both ends thereof being connected to the DC power source and the electric vehicle drive source, respectively; and
a drive element which is connected in parallel to the electric vehicle drive source; and
a single smoothing capacitor which is connected in parallel to the electric vehicle drive source, the DC-DC converter system stepping up and supplying a voltage of the DC power source to the electric vehicle drive source; and
a control circuit which supplies driving signals to the drive elements included in the respective ones of the plurality of DC-DC converter units of the DC-DC converter system at different timings; and
**in that** the drive elements are driven at different timings, whereby stepped-up voltages are supplied to the smoothing capacitor at different timings to thereby drive the electric vehicle drive source.

7. An electric vehicle, **characterized in that** the electric vehicle comprises:
a DC-DC converter system, which comprises:
a plurality of DC-DC converter units, each comprising:
a DC power source;
an electric vehicle drive source;
a coil having both ends thereof being connected to the DC power source and the electric vehicle drive source, respectively; and
a smoothing capacitor and a drive element which are, respectively, connected in parallel to the electric vehicle drive source, the DC-DC converter units being connected in parallel to the electric vehicle drive source, and the DC-DC converter system stepping up and supplying a voltage of the DC power source to the electric vehicle drive source; and
a control circuit which supplies driving signals to the drive elements of the respective ones of the plurality of DC-DC converter units constituting the DC-DC converter system at different timings; and **in that** the drive elements are driven at different timings, whereby the smoothing capacitors constituting the plurality of DC-DC converter units are charged at different timings to thereby drive the electric vehicle drive source.
